# EUROPEAN PATENT APPLICATION

(11) **EP 1 688 238 A1**
(43) Date of publication of application: **09.08.2006**
(21) Application number: 05002075.9
(22) Date of filing: 02.02.2005
(51) Int. Cl.: B29C 73/04, B29C 73/32, B29C 33/52

(54) **Method for repair of composite articles**

(71) Applicant: SAAB AB, 581 88 Linköping (SE)
(72) Inventor: Krogager, Max, 582 42 Linköping (SE); Petersson, Mikael, 585 90 Limköping (SE); Weidmann, Björn, 590 31 Borensberg (SE)
(74) Representative: Holmberg, Magnus

(57) **Abstract**

The present invention relates to a method for repair of a composite article (19). The method is characterized by the following steps. The composite article material is removed from the damaged areas (22) of the composite article (19). Thereafter, a lay-up is produced in the damaged areas, said lay-up comprising not cured composite material (5a,5b) formed on at least one surface of at least one former having walls (3a,3b) of a water-soluble fiber composite material. The lay-up is cured in a curing process, while providing a substantially unitary pressure on all the surfaces of the lay-up in the curing process. After curing, the former(s) (3a,3b) is removed from the repaired composite article (19) by dissolving the laminate in water.

## Description

### TECHNICAL FIELD

The invention relates to a method for repair of composite articles.

### PRIOR ART

The fabrication of many items and structural elements, such as vehicles, vessels and aircraft, out of curable composite materials containing layers of fibers or metals joined by means of an adhesive layer of for example thermoplastic, is known. Such composite materials are distinguished by high strength and relatively low weight. These distinguishing properties have resulted in it becoming increasingly common in the aviation industry to use items containing composite materials.

Conventionally, structural elements of composite materials are manufactured by arranging a former made of metal on a base plate and laying up laminate layers on the former, so that the laminate lies against the surface of the former. Thereafter, the base plate with the laminate layer covered former is inserted into a pressurized tank, wherein the laminate element is cured. After curing, the cured element is removed from the former. It is known to encapsulate the base plate, former and laminate material in a bag before insertion into the pressurized tank in order to increase the pressure acting on the composite material in the pressurized tank. The use of the bagging-technique is widely spread and variants of the bagging-technique are described in a great number of patent documents, books and articles.

One drawback with the above mentioned method for manufacturing structural elements of laminates is that only structural elements having a very simple structure can be manufactured using said technique, as the cured structural element has to be removed from the former.

GB 2 275 015 describes a destructible, hollow former used in manufacture of a hollow article from composite materials. The former is made by charging a rotational molding tool with sufficient quantity of a hot melt/cold set water soluble compound as is required to coat the internal surfaces of the tool to a desired thickness, and start rotation. In a next step, the rotating tool is moved into a heated oven and is kept there for a sufficient time to permit the compound to be molten and coat all internal surfaces of the tool. After removal from the oven, rotation of the tool is continued to allow the tool to cool to a temperature at which the compound hardens. Then, the tool is opened and the former is removed. The former can now be used in the manufacture of a hollow article, wherein the manufacture comprises laying upon the former a required combination of materials, curing the materials on the former and destroying the former to obtain the hollow article. The former is destroyed either by impacting it with a hard instrument to break it into pieces or by dissolution in water.

One object of the invention is to provide a destructible former with the aid of which more complex structural elements can be manufactured or repaired.

Another object of the invention is to provide method for repair of articles including said complex structural elements using said destructible formers.

### SUMMARY OF THE INVENTION

The present invention relates to a method for repair of a composite article, the repair method comprising the following steps:
- removing the composite article material from the damaged areas of the composite article,
- producing a lay-up in the damaged areas comprising not cured composite material formed on at least one surface of at least one former having walls of a water-soluble fiber composite material,
- curing the lay-up in a curing process, while providing a substantially unitary pressure on all the surfaces of the lay-up in the curing process and
- removing the former from the repaired composite article by dissolving the laminate in water.

The composite articles are for example panels for use in the fuselage of aircraft or in other vehicles such as cars, motorbikes, boats etc. The panels are for example monolithic structures, sandwich structures or the like.

The removing of the material from the damaged areas can for example be made using known techniques such as drilling, milling or sawing.

The fiber composite material of the formers comprises a fiber material and an adhesive and water. The fiber material is for example a fabric such as a woven textile, glass, carbon, aramide etc. For example, a dishcloth could serve as the fiber material. The adhesive is for example a starch such as starch from corn, potatoes or wheat or an adhesive of another type such as polyvinyl alcohol (PVA). For example, paperhangers paste can be used comprising both starch and water. In another example, one or more sheets of paper are used as the fiber composite material; in this case it is only necessary to add water and starch.

The water-soluble fiber composite material can be laminated, in which case the fiber material for example is a fabric or a woven textile. The laminated fiber composite material comprises two or more layers of the material laminated by using the adhesive component.

In accordance with one embodiment of the present invention, the formers are fabricated using the following steps:
- wetting the water-soluble fiber composite material,
- forming the wetted water-soluble fiber composite on a master tool such that the fiber composite material lies against a surface area of the master tool,
- allowing the water-soluble fiber composite to dry on the master tool and
- removing the dry water-soluble fiber composite from the master tool, wherein the dry fiber composite forms the walls of the thus fabricated former.

When the curing process is performed under an enhanced pressure, for example in a so-called autoclave, it may be necessary to support the former in the curing process. In one preferable embodiment of the invention, this is achieved by providing a substantially unitary pressure on all the surfaces of the lay-up in the curing process, whereby substantially no collapsing forces act on the former and composite article.

The evenly distributed pressure during curing also provides for a higher quality of the final article, wherein the risk of air pockets in the article is minimized.

In accordance with one embodiment of the invention, the substantially unitary pressure is provided by enclosing the surfaces of the lay-up in at least one bag and applying underpressure between the lay-up and the bags. For example, vacuum can be applied between the lay-up and the bags.

Preferably, the formers are designed so as to provide a repaired composite article of a shape essentially identical to the original composite article.

The composite articles repaired in accordance with the method above are preferably fiber composite articles, even though composite articles for other types may be repaired. The fiber composite material of the article comprises in one example the fiber material and a thermosetting plastic, such as epoxy, vinyl ester or polyester. The fiber material comprises for example glass fibers, carbon fibers or aramide fibers.

In using the repair method described above, it is possible to repair composite articles with very complex geometries in only one cure operation. Further, the laminate material of the former is light in weight and easy to handle. It is also very easy to perform cutting, milling, drilling and other types of forming operations on the former laminate walls. Another advantage with the invention is that the former laminate has a low thermal conductivity, whereby it is easier to obtain thermal stability. The low thermal conductivity also gives rise to shortened cure cycles when curing is performed at an enhanced temperature, such as in the region 100°C to 200C°. The cure cycle can then at least be halved. Further, it is much easier to obtain the tolerance chain compared to when using conventional techniques with non-flexible tools, such as metal tools.

The repair method can be used for the repair of damages in the article caused by ammunition or other objects impacting on the article. The repair method can also be used for the repair of damages formed in manufacture of the article or any other types of damages.

### SHORT DESCRIPTION OF THE DRAWING

Fig 1 shows a perspective view of a master tool for the manufacture of a former according to one embodiment of the invention
Fig 2 shows in cross-section the former on the master tool.
Fig 3 shows in cross-section a lay-up according to one embodiment of the invention for the manufacture of an article.
Fig 4 shows in cross-section the lay-up of Fig 3, enclosed in bagging films.
Fig 5 shows schematically a water tank into which the lay-up is submerged.
Fig 6 shows a perspective view of an omega profile.
Fig 7 shows a perspective view of an article manufactured in accordance with the invention in only one cure operation.
Fig 8 shows in cross-section a damaged sandwich structure with internal I-profiles.
Fig 9 shows in cross-section the sandwich structure of Fig 8 with the composite material in an area around the damaged parts removed.
Fig 10 shows in cross-section a lay-up according to one embodiment of the invention for the repair or rework of the sandwich panel of Fig 9.
Fig 11 shows in cross-section the lay-up of Fig 10, enclosed in bagging films.
Fig 12 shows in cross-section the sandwich structure of Fig 8 repaired or reworked.

### PREFERRED EMBODIMENTS

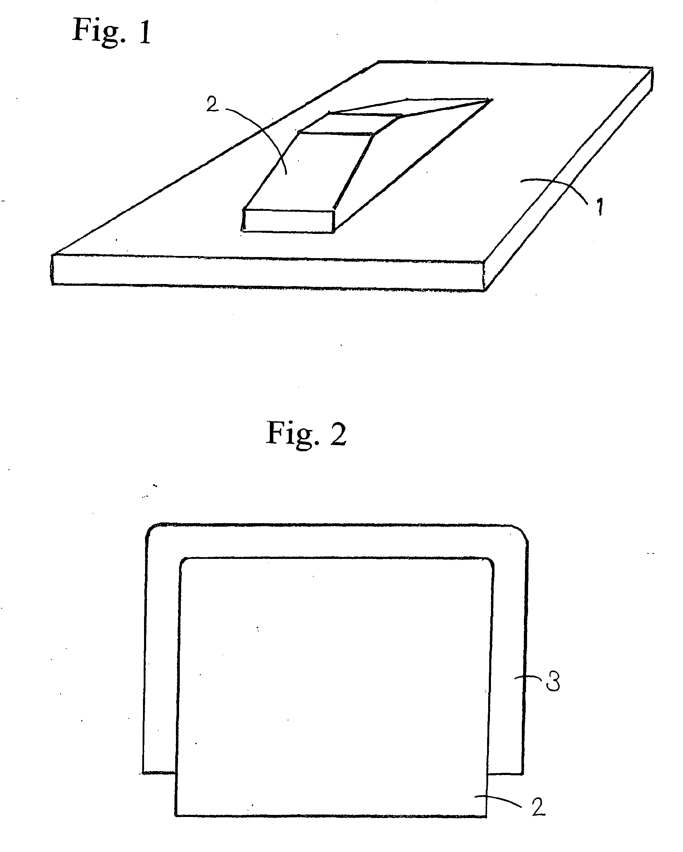

In Fig 1, a tool for the manufacture of a former in the form of a water-soluble stabilizing fiber composite 3 (see Fig 2) comprises a base plate 1 and a master tool 2 arranged on the base plate 1. The base plate is a thick sheet for example made of metal. The master tool can be made of a metal, but can also be a wooden or plastic material or a material of another type. The tool of Fig 1 can be used for manufacturing an arbitrary number of stabilizing fiber composite formers 3.

In Fig 2, the former material, such as a fabric wetted by a mixture of water and starch, is placed on the master tool 2 such that the former 3 lies against the surface of the master tool 2. As the fabric is wetted, it can easily be formed around the surface of the master tool 2. For example, in a case where the former 3 forms a profile, it is not necessary that the whole surface of the master tool is covered by the wetted fabric, as the profile suitably has open ends. The wetted fabric can advantageously dry over night in room temperature. If it is necessary to provide the former 3 quicker, it can dry in a chamber with enhanced temperature. When the former 3 has dried, it is stiff and can be removed from the master tool 2. The master tool 2 can be shaped in order to make formers 3 of a great number of different shapes. For example, profiles can be made, such as hat profiles, omega profiles etc. The former 3 can now be used for manufacturing composite articles and structure elements of said composite material formed for example as curved profiles or closed profiles, which was not possible with prior art methods. The term closed profiles is intended to relate to profiles having a smaller cross section area at the ends than on parts between the ends.

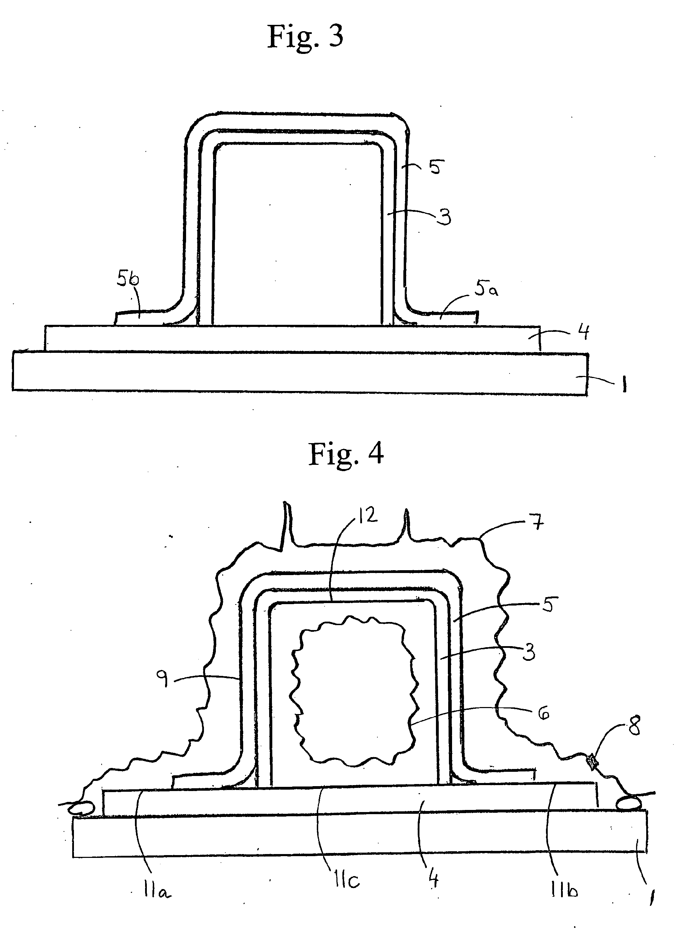

In Fig 3 the base plate 1 is used again. A composite plate 4 is arranged on the base plate 1. The dry former 3 is arranged on top of the composite plate 4. A composite layer 5 is formed around one or more surfaces of the former 3 such that it lies against the former in a layer having a unitary thickness. The composite plate 4 then forms the outer surface of the final article and the composite layer 5 forms a stiffener, spar, fitting etc integrated with the article. In the example in the shown figure, the composite layer 5 covers the outer surface of the former 3. The stabilizing laminate further extends down into contact with the composite plate 4 by means of contact parts 5a, 5b so that the composite layer 5 can be integrated with the composite plate 4 in the following curing process. The composite plate 4 and the composite layer 5 can be of the same material or of different materials.

In Fig 4, an outer vacuum bagging film 7 is enclosing the outer surfaces 9 of the layer 5 and the open surfaces 11a, 11b of the composite plate 4. In the shown example, the film is fastened along the periphery of the base plate 1, using some fastening means, such as, e.g. adhesive tape and bagging sealtants. An inner bagging film 6 is placed inside the former 3. The circumference of the inner bagging film 6 is chosen such that the inner bagging film 6 can seal tight against the walls defined by the inner surface 12 of the former 3 by the adjacent surface 11c of the composite plate 4. The edges of the vacuum bagging films 6,7 are connected to each other and sealed. This is called free standing bagging.

When a pump (not shown) is started, the gas that is present between the bagging films 6,7 will be carried away through at least one outlet 8 in the bagging films 6, 7. Thereby a vacuum will be created, whereupon the bagging films will seal tight upon the outer surfaces 9, 11a, 11b of the composite layer 5 and composite plate 4 and upon the walls 12, 11c defined by the inner surfaces of the former 3 and the composite plate 4. Thus, a unitary pressure is provided on all the surfaces on the former and therefore no collapsing forces act on the former.

It should be noted that additional elements can be arranged between the article and the bagging films 6,7; for example, a perforated plastic film (not shown) can be placed nearest the article/former, and a so-called tear-away cloth (not shown) can be placed between the article/former and the bagging films.

In one embodiment, the base element 1 with its associated article parts 4, 5 and the former 3 can be put into a pressure tank, whereby curing is performed under an increased pressure compared to normal air pressure, for example 1 to 6 bar overpressure. In a further embodiment, the curing is performed in a so-called autoclave wherein the curing is performed in heat, for example in the temperature region of 100°-200°C, and under an increased pressure, such as 1-6 bar overpressure. In yet another embodiment the curing is performed in an oven for example in the temperature region of 100°-200°C.

In using this bagging technique, wherein a unitary pressure is provided on former of the stabilizing laminate both from beneath and from above, the former 3 will withstand high curing pressures without collapsing and therefore perform as well as a conventional metal former in that aspect.

The choice of the thickness of the former 3 is made considering the height of the former 3 and the former material. A person skilled in the art would perform strength calculations and tests in order to come up with a suitable wall thickness of the former. As an example, a 120mm high former 3 made of a starch/fabric fiber composite and bagged-in at vacuum in an autoclave preferably has a thickness in the region of 0,5-2mm.

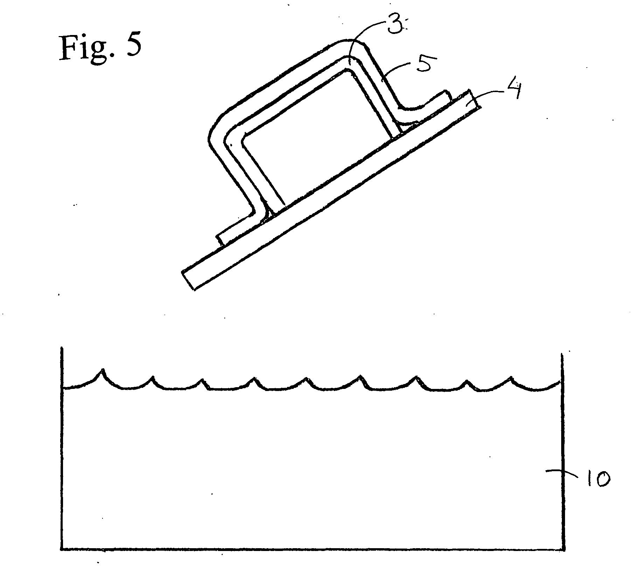

In Fig 5, the cured article including the former 3 is debagged and submerged in a water tank 10. The water dissolves the starch, whereby the stabilizing laminate softens and thus becomes easy to remove. Alternatively, running water can be applied to the former 3 in order to dissolve the starch.

The invention has now been explained in relation to the manufacture of a quite simple article. One great advantage of the invention is that it allows for the manufacture of very complex geometries in only one cure operation. As the dried stabilizing composite material of the former 3 is well suited for performing different operations on, such as cutting, milling, drilling, etc, a complex pattern of crossing profiles can be developed on the composite plate 4 and the composite layers 5 can be formed on the crossing former profiles. The composite layers 5 of the final article can then form hat stiffener profiles, omega profiles, closed profiles, curved profiles and crossing spars capable of transferring both shear and bending loads.

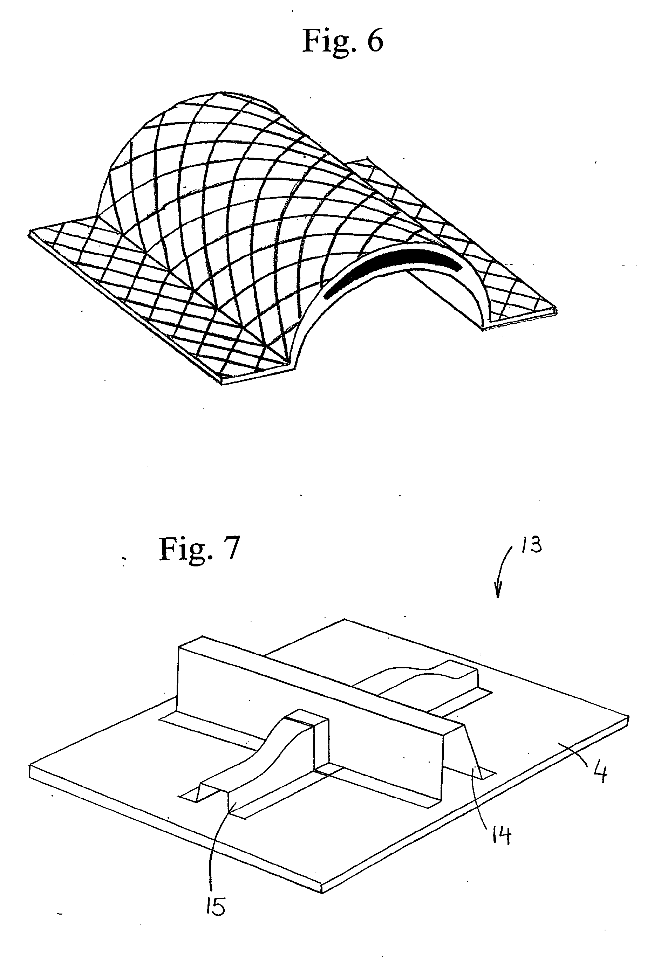

Fig 6 shows a curved omega profile made using a former 3 according to the invention.

In fig 7, an article 13 is shown having crossing profiles including a hat stiffener profile 14 and a closed profile 15 integrated on the composite plate 4.

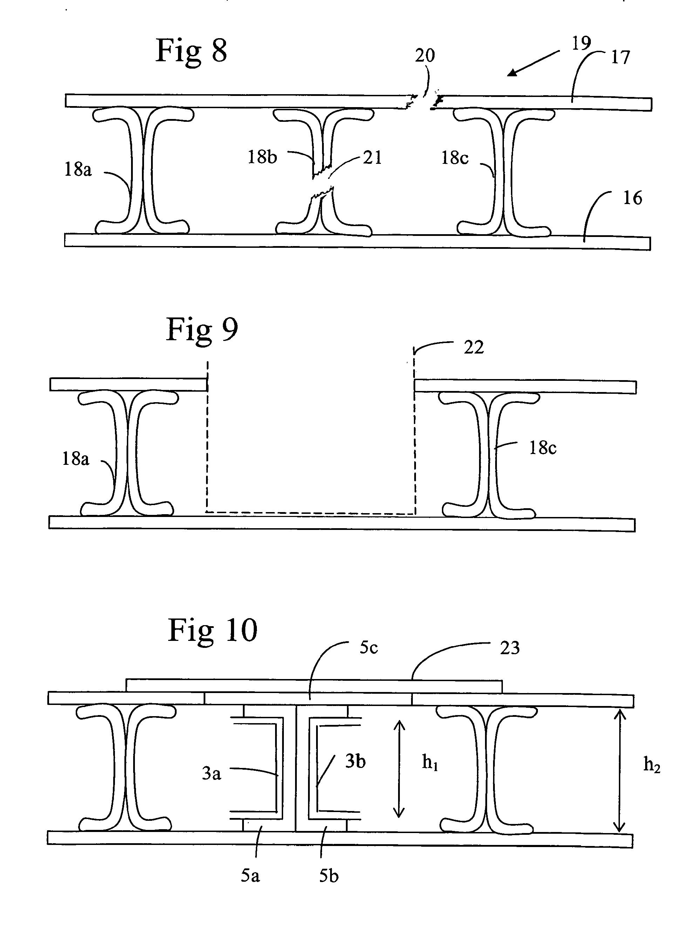

In fig 8 a sandwich structure 19 comprises a first composite plate 16 and a second composite plate 17 and a number of supporting composite I-profiles 18a, 18b, 18c arranged between the first and second plates 16, 17 and cementing the first plate 16 to the second plate 17. The sandwich structure is damaged in a first location 20 and a second location 21.

In fig 9 a part of the sandwich structure in an area 22 around the damaged locations 20, 21 has been removed. The removed sandwich structure part has been removed for example by using a conventional method such as drilling, milling or sawing.

In fig 10 a lay-up has been produced for reconstructing the damaged I-profile 18b and the damaged composite plate 17. In order to reconstruct the damaged I-profile 18b a first dry water-soluble former 3a and a second dry water-soluble former 3b has been provided. The manufacture of formers is described in more detail above. The formers 3a, 3b are shaped as the walls of a rectangular pipe with one of the pipe sides removed. The length of the pipe is chosen so as to coincide with the length of the removed I-profile part. Each former 3a, 3b is covered with a composite material layer 5a, 5b. The formers 3a, 3b with the composite material layer 5a, 5b are arranged in the removed area 22 against each other so as to form an I-profile part. The height h₁ of the formers is chosen such that the composite covered formers have a height h₂ which coincides with the height of the removed I-profile part. In order to reconstruct the damaged composite plate 17, a composite material layer 5c is arranged on a caul plate 23, said composite material layer 5c having the same size, ie thickness, length and width, as the removed composite plate part. The caul plate 23 has been arranged up side down such that the composite material layer 5c fits within the removed composite plate part.

The composite material layers 5a, 5b ,5c are arranged in close contact to each other and to the composite plates 17, 18 such that the layers 5a, 5b, 5c can be integrated with the sandwich structure 19 in the following curing process. The composite plates 16, 17 and the I-profiles 18a, 18b, 18c can be of the same material or of different materials.

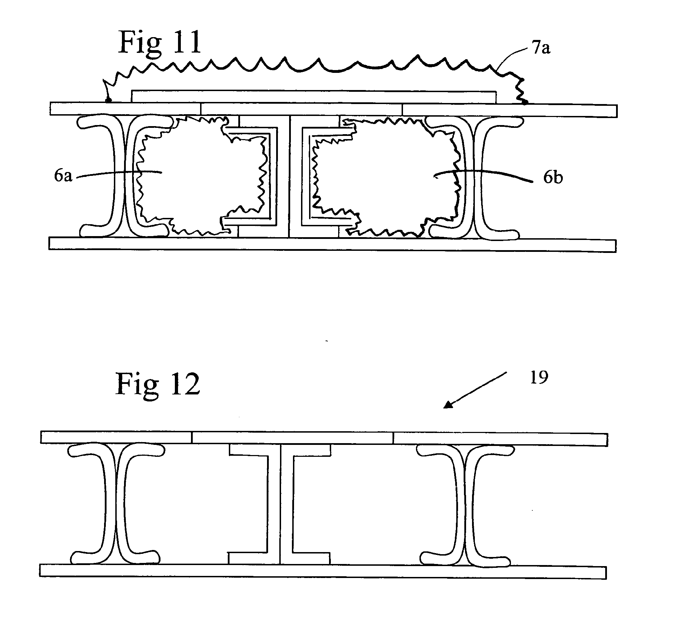

In Fig 11, an outer vacuum bagging film 7a is enclosing the outer surface of the composite plate 17 such that it covers at least the caul plate 23. The length and width of the caul plate is preferably larger than the length and with of the underlying composite layer 5c. Two inner bagging films 6a, 6b are placed in the sandwich structure between the reconstructed I-profile part 5a, 5b and the I-profiles 18a, 18c adjacent the reconstructed I-profile part. The circumference of the inner bagging films 6a, 6b are chosen such that the inner bagging films 6a, 6b can seal tight against the walls of the space between the reconstructed I-profile part and the adjacent I-profiles 18a, 18c. The edges of the vacuum bagging films 6a, 6b,7a are connected to each other and sealed. This is called free standing bagging.

When a pump is started, the gas that is present between the bagging films 6a, 6b ,7a will be carried away through at least one outlet in the bagging films. Thereby a vacuum will be created, whereupon the bagging films will seal tight upon the free surfaces of the formers 3a, 3b and composite layers 5a, 5b, 5c. Thus, a unitary pressure is provided on all the surfaces on the former and therefore no collapsing forces act on the former.

It should be noted that additional elements, apart from the caul plate 23, can be arranged between the sandwich structure 19 and the bagging films 6a, 6b,7a; for example, a perforated plastic film (not shown) can be placed nearest the sandwich structure/formers, and a so-called tear-away cloth can be placed between the sandwich structure/formers and the bagging films.

In one embodiment, the sandwich structure 19 with the formers 3a, 3b and bags 6a, 6b, 7a can be put into a pressure tank, whereby curing is performed under an increased pressure compared to normal air pressure, for example 1 to 6 bar overpressure. In a further embodiment, the curing is performed in a so-called autoclave wherein the curing is performed in heat, for example in the temperature region of 100°-200°C, and under an increased pressure, such as 1-6 bar overpressure. In yet another embodiment the curing is performed in an oven for example in the temperature region of 100°-200°C.

In using this bagging technique, wherein a unitary pressure is provided on the formers 3a, 3b made of the stabilizing laminate both from beneath and from above, the formers 3a, 3b will withstand high curing pressures without collapsing and therefore perform as well as a conventional metal former in that aspect.

The choice of the thickness of the former 3a, 3b is made considering the height of the former 3 and the former material. However, in general a very thin former wall can provide sufficient stabilization for the curing composite material because of the unitary pressure provided. The thin walls of the formers provides for substantially shortened curing cycles when the curing is performed in heat as the former material do not accumulate the energy of the heat. Instead, the curing composite material accumulates most of the heat, thus substantially shortening the curing cycle.

In Fig 12, the bags 6a, 5b, 7a, formers 3a, 3b and caul plate 23 have been removed from the cured sandwich structure. The formers 3a, 3b have been removed by the application of water to the formers, whereby the starch of the formers dissolves and the stabilizing laminate softens and thus becomes easy to remove. The sandwich structure has been repaired or reworked.

The repairing technique described in relation to the example above is not intended to be limiting to the scope of the claims. For example the repair method can be used for repair of a number of different composite articles such as hat profiles and U-profiles.

## Claims

1. Method for repair of a composite article, **characterized by** the following steps:
- removing the composite article material from the damaged areas of the composite article,
- producing a lay-up in the damaged areas comprising not cured composite material formed on at least one surface of at least one former having walls of a water-soluble fiber composite material,
- curing the lay-up in a curing process, and
- removing the former from the repaired composite article by dissolving the laminate in water.

2. Method according to claim 1, **characterized in that** a substantially unitary pressure is provided on all the surfaces of the lay-up in the curing process.

3. Method according to claim 2, **characterized in that** the substantially unitary pressure is provided by enclosing the surfaces of the lay-up in at least one bag and applying underpressure between the lay-up and the bags.

4. Method according to claim 3, ***characterized* in that** vacuum is applied between the lay-up and the bags.

5. Method according to claim 1, **characterized in that** the former is fabricated using the following steps:
- wetting the water-soluble fiber composite material,
- forming the wetted water-soluble fiber composite on a master tool such that the fiber composite material lies against a surface area of the master tool,
- allowing the water-soluble fiber composite to dry on the master tool and
- removing the dry water-soluble fiber composite from the master tool, wherein the dry fiber composite forms the walls of the thus fabricated former.

6. A destructible former according to claim 5, **characterized in that** the water-soluble fiber composite material is laminated.

7. A destructible former according to claim 6, **characterized in that** the fiber material is a fabric.

8. A destructible former according to claim 6, **characterized in that** the fiber material is a woven textile.

9. A destructible former according to claim 5, **characterized in that** the fiber composite material comprises starch.

10. Method according to claim 1, **characterized in that** producing of the lay-up comprises forming one or more formers designed so as to provide a repaired composite article of a shape essentially identical to the original composite article.
